(19)

Europäisches
Patentamt
European
Patent Office
Office européen
des brevets

(11) **EP 1 955 767 A1**

(12) **EUROPEAN PATENT APPLICATION**
published in accordance with Art. 158(3) EPC

(43) Date of publication:
**13.08.2008 Bulletin 2008/33**

(21) Application number: **06782664.4**

(22) Date of filing: **10.08.2006**

(51) Int Cl.:
***B01J 35/02*** (2006.01)    ***B01J 35/10*** (2006.01)
***C08K 9/02*** (2006.01)    ***C08L 101/00*** (2006.01)

(86) International application number:
**PCT/JP2006/315878**

(87) International publication number:
**WO 2007/039984 (12.04.2007 Gazette 2007/15)**

(84) Designated Contracting States:
**DE FR GB IT NL**

(30) Priority: **30.09.2005 JP 2005287643**

(71) Applicant: **Mitsui Chemicals, Inc.**
**Tokyo 105-7117 (JP)**

(72) Inventors:
• **HORIUCHI, Nobuhiko**
**Chiba 299-0265 (JP)**

• **NABETA, Takashi**
**Chiba 299-0265 (JP)**
• **MIYAZOE, Satoru**
**Chiba 299-0265 (JP)**

(74) Representative: **Stuart, Ian Alexander et al**
**Mewburn Ellis LLP**
**York House**
**23 Kingsway**
**London WC2B 6HP (GB)**

(54) **PHOTOCATALYST-CONTAINING ORGANIC MATERIAL**

(57)    The present invention is to provide a photocatalyst-containing organic material which is suppressed in the decomposition or deterioration of an organic substance being in contact with a photocatalyst with the photocatalytic function retained. It is provided a photocatalyst-containing organic material comprising a member comprising an organic substance; and a photocatalyst contained in the member, wherein said photocatalyst comprising a base having photocatalytic activity; and a silicon oxide film covering the base, wherein the film is substantially pore-free, and wherein the photocatalyst has a alkali metal content of not less than 1 ppm but not more than 1,000 ppm.

EP 1 955 767 A1

**Description**

TECHNICAL FIELD

The present invention relates to a photocatalyst-containing organic material constituted of a member containing an organic substance and a photocatalyst contained in the member.

BACKGROUND ART

A metal oxide semiconductor such as titania, zinc oxide and the like has a property of absorbing light having an energy corresponding to its band gap. In recent years, such a metal oxide semiconductor has been paid attention to because of its high activity due to holes and electrons generated by excitation caused by irradiation with light so that there has been attempted to use such a semiconductor as a "photocatalyst" for its application to the remediation of the environment such as the purification of water, prevention of contamination, sterilization, deodorization, purification of atmosphere and the like. Herein, a function such as the purification of water, purification of atmosphere, deodorization or the like has an effect of decomposing contaminant substances or odor substances by the oxidation-reduction action of the photocatalyst. More concretely, its application to decomposition of VOC (volatile organic compounds), environmental hormones, nitrogen oxides, ammonia, amines, aldehydes, lower fatty acids, hydrogen sulfide, mercaptans or the like has been advanced. For a function such as the prevention of contamination, an effect of decomposing an organic substance such as oil or the like into carbon dioxide and water for removing stain has been used. A function of sterilization is an effect of suppressing the propagation of bacteria or the like by destroying them or making them dormant by a decomposing action of the photocatalyst.

Furthermore, it has also been known that the affinity for water is remarkably enhanced by irradiation with light as well as the decomposing action, and its application as a self-cleaning material or an anti-fogging material has been proposed.

Since such a photocatalyst exhibits various excellent functions by absorbing light, application and development of a composite material with a photocatalyst contained in various members have been progressed.

However, when a photocatalyst is simply composited with a member, and the member is made of an organic substance such as resin, fiber, wood, paper and the like, the photocatalyst makes the member itself to be decomposed, thus causing breakage or crack. The photocatalyst is peeled away from the member or the member itself is impaired or embrittled.

Methods for improving such problems have already been proposed. For example, there can be exemplified a deodorant sheet obtained by combining a titanium oxide photocatalyst coated with a porous inorganic substance with an odor substance/oxygen gas and an optically-transparent resin (refer to Patent Document 1), and a resin composition containing a porous microcapsule-like photocatalyst (refer to Patent Document 2). However, since the photocatalyst particle such as titanium oxide is thickly coated with a porous inorganic substance, original performance of the photocatalyst is greatly lowered.

Furthermore, there has also been proposed a film material having photocatalytic function in which a photocatalyst particle with the surface of the photocatalyst partly coated with inert ceramics as a photocatalyst is supported on a surface of a plastic film (refer to Patent Document 3) . However, ceramics are partly coated on the surface of the photocatalyst so that it is difficult to mention that its influence on the member can be sufficiently suppressed.

There have been disclosed that a silica-based film is formed by supplying organohydrogen polysiloxane to a photocatalyst in the gas phase and that the bactericidal activity under light irradiation conditions is enhanced higher than the original activity of the photocatalyst even though the photocatalyst is coated (refer to Patent Document 4).

There has been disclosed a titanium oxide photocatalyst selectively removing a basic gas such as ammonia gas, amine-based gas or the like (refer to Patent Document 5). The photocatalyst as described in the document has a core composed of titanium oxide particle having photocatalytic activity and a coating layer of hydrated silica surrounding around the core. The coating layer selectively adsorbs the basic gas and is efficiently supplied to the active site of titanium oxide core, whereby the coating layer functions such that the ability to eliminate the basic gas from the total photocatalyst is enhanced.

However, in the photocatalysts described in Patent Documents 4 and 5, photodecomposition performance over organic substances is not sufficient either, and in the photocatalyst described in Patent Document 5, the adsorptive capability over harmful gas other than basic gas is insufficient. This is considered because the structure of the photocatalyst obtained by the method described in Patent Document 5, or the mechanical strength or durability of the coating layer of hydrated silica is insufficient.

Patent Document 1: Japanese Patent Laid-open No. 1997-182782
Patent Document 2: Japanese Patent Laid-open No. 1997-225321

Patent Document 3: Japanese Patent No. 3484470
Patent Document 4: Japanese Patent Laid-open No. 1987-260717
Patent Document 5: Japanese Patent Laid-open No. 2002-159865

DISCLOSURE OF THE INVENTION

Under the above circumstances, an object of the present invention is to provide a photocatalyst-containing organic material with a photocatalyst contained in the organic material which is suppressed in the decomposition or deterioration of an organic substance being in contact with the photocatalyst with the photocatalytic function retained which can satisfy the requirements such as the prevention of contamination, deodorization, sterilization and the like.

The present inventors have paid attention to the fact that a porous silica coated photocatalyst is difficult to deteriorate an organic material, but the photocatalytic activity is insufficient, and have considered that the cause of the low activity is the light which is difficult to reach the metal-compound semiconductor consisting of cores since light is diffused due to a porous film and that the above problem can be solved if it is coated with a silica film having no pores. Then, they have made an extensive effort and as a result, have found that a photocatalyst-containing organic material constituted of a member made of an organic substance and a photocatalyst contained in the member is excellent in photocatalytic activity and difficult to deteriorate an organic material, characterized in that the photocatalyst is provided with a base having photocatalytic activity and a substantially pore-free silicon oxide film covering the base, and that the alkali metal content of the photocatalyst is not less than 1 ppm but not more than 1,000 ppm. Thus, the invention has been completed.
That is, the present invention relates to a photocatalyst-containing organic material comprising:

a member comprising an organic substance; and
a photocatalyst contained in the member,
wherein said photocatalyst comprising:

a base having photocatalytic activity; and
a silicon oxide film covering the base, wherein the film is substantially pore-free, and

wherein the photocatalyst has a alkali metal content of not less than 1 ppm but not more than 1,000 ppm.

According to the present invention, the decomposition or deterioration of an organic material can be suppressed with the necessary photocatalytic activity retained.

BRIEF DESCRIPTION OF THE DRAWINGS

The aforementioned objects and other objects, characteristics and advantages become further clear by the appropriate embodiments to be described below and the following drawings accompanied thereto.

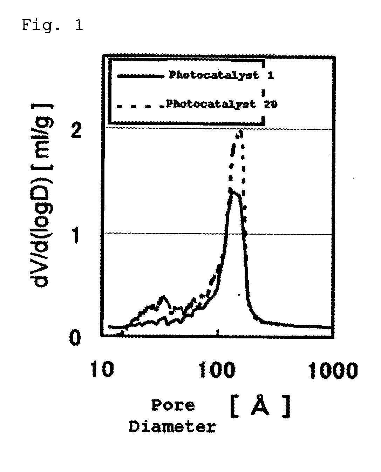

Fig. 1 is a graph showing a log differential pore volume distribution curve (a solid line) of a photocatalyst 1 and a log differential pore volume distribution curve (a dotted line) of a photocatalyst (photocatalyst 20) without having a silicon oxide film corresponding to a base of the photocatalyst 1.

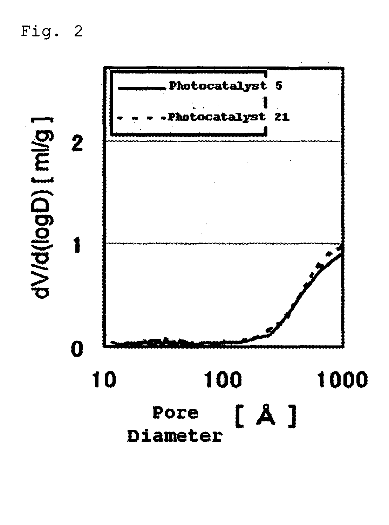

Fig. 2 is a graph showing a log differential pore volume distribution curve (a solid line) of a photocatalyst 5 and a log differential pore volume distribution curve (a dotted line) of a photocatalyst (photocatalyst 21) without having a silicon oxide film corresponding to a base of the photocatalyst 5.

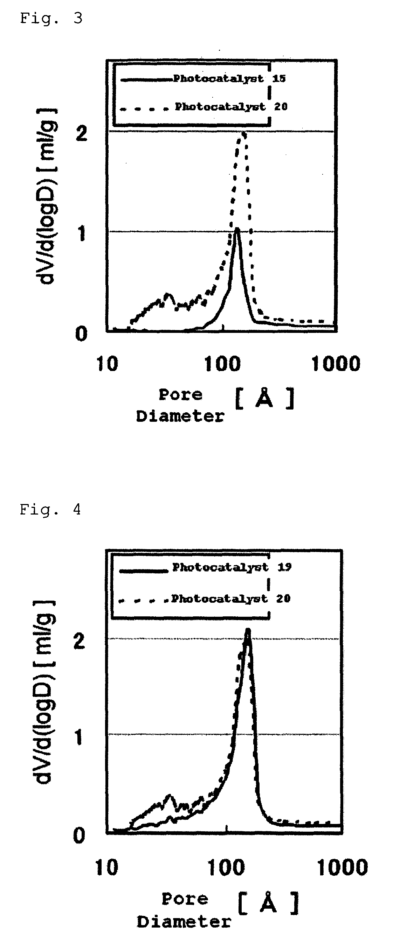

Fig. 3 is a graph showing a log differential pore volume distribution curve (a solid line) of a photocatalyst 15 and a log differential pore volume distribution curve (a dotted line) of a photocatalyst (photocatalyst 20) without having a silicon oxide film corresponding to a base of the photocatalyst 15.
Fig. 4 is a graph showing a log differential pore volume distribution curve (a solid line) of a photocatalyst 19 and a log differential pore volume distribution curve (a dotted line) of a photocatalyst (photocatalyst 20) without having a silicon oxide film corresponding to a base of the photocatalyst 19.

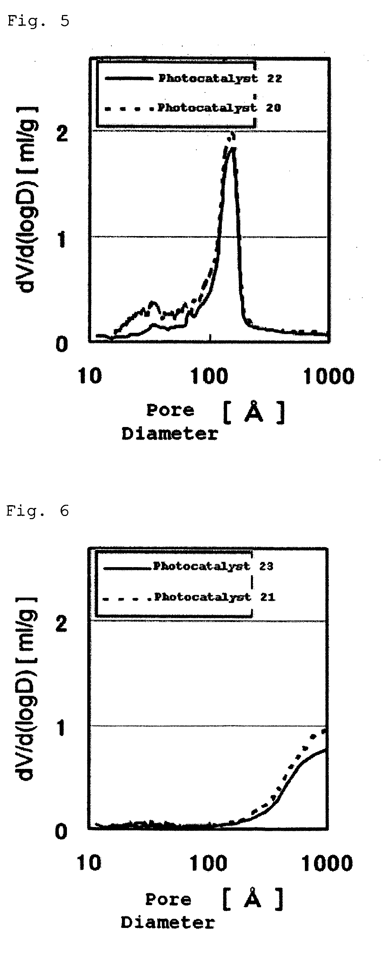

Fig. 5 is a graph showing a log differential pore volume distribution curve (a solid line) of a photocatalyst 22 and a log differential pore volume distribution curve (a dotted line) of a photocatalyst (photocatalyst 20) without having a silicon oxide film corresponding to a base of the photocatalyst 22.
Fig. 6 is a graph showing a log differential pore volume distribution curve (a solid line) of a photocatalyst 23 and a log differential pore volume distribution curve (a dotted line) of a photocatalyst (photocatalyst 21) without having a silicon oxide film corresponding to a base of the photocatalyst 23.

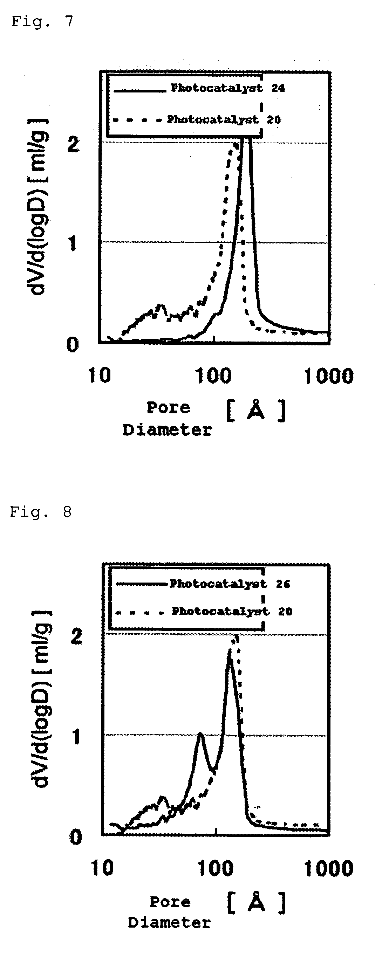

Fig. 7 is a graph showing a log differential pore volume distribution curve (a solid line) of a photocatalyst 24 and a log differential pore volume distribution curve (a dotted line) of a photocatalyst (photocatalyst 20) without having a silicon oxide film corresponding to a base of the photocatalyst 24.

Fig. 8 is a graph showing a log differential pore volume distribution curve (a solid line) of a photocatalyst 26 and a log differential pore volume distribution curve (a dotted line) of a photocatalyst (photocatalyst 20) without having a silicon oxide film corresponding to a base of the photocatalyst 26.

BEST MODE FOR CARRYING OUT THE INVENTION

The photocatalyst-containing organic material of the present invention comprises a member comprising an organic substance and a photocatalyst contained in the member. The present invention is characterized in that the photocatalyst is provided with a base having photocatalytic activity and a substantially pore-free silicon oxide film covering the base, and the alkali metal content is not less than 1 ppm but not more than 1,000 ppm (hereinafter properly simply referred to as a "silicon oxide coated photocatalyst").

The aforementioned silicon oxide coated photocatalyst refers to a photocatalyst having a surface of the base having photocatalytic function coated with a film made of silicon oxide. Accordingly, the silicon oxide coated photocatalyst does not include a photocatalyst bonded to silicon oxide that is produced by forming a photocatalyst later in the presence of silicon oxide or a composite formed by combining silicon oxide with a photocatalyst in the same vessel.

The type of coating a base with a silicon oxide film is not particularly limited, and includes any of coating a part of the base and coating the whole base. But, from the viewpoint that it is difficult to deteriorate the organic material, the whole surface of the base is preferably coated with a film made of silicon oxide all at once. Herein, examples of the silicon oxide film include both a non-calcined film and a film after calcining. In the present invention, preferred is a calcined film of silicon oxide after calcining.

As a base having photocatalytic activity (hereinafter properly simply referred to as a "base"), a metal-compound photonic semiconductor can be used. Examples of the metal-compound photonic semiconductor include titanium oxide, zinc oxide, tungsten oxide, strontium titanate and the like. Among them, preferred is titanium oxide which is excellent in photocatalytic activity and stability as well, and which is harmless. Examples of titanium oxide include amorphous type titanium oxide, anatase type titanium oxide, rutile type titanium oxide, brookite type titanium oxide and the like. Of these, anatase type titanium oxide, rutile type titanium oxide or a mixture thereof excellent in the photocatalytic activity is more preferable, and a small amount of amorphous type titanium oxide may also be contained therein.

As a base, there can also be used a metal-compound photonic semiconductor with one or more transition metals added thereto, a metal-compound semiconductor with one or more of typical elements in group 14, group 15 and/or group 16 added thereto, a photonic semiconductor constituted of two or more metal compounds, and a mixture of two or more metal-compound photonic semiconductors.

Furthermore, as a base, a particle of the metal-compound photonic semiconductor is preferably used. Further, however, a metal-compound photonic semiconductor preferably contains a base having a specific surface area of preferably not less than 30 $m^2$/g, more preferably not less than 120 $m^2$/g but not more than 400 $m^2$/g and most preferably not less than 120 $m^2$/g but not more than 300 $m^2$/g. When the specific surface area of the base is within the above range, excellent catalytic activity can be maintained.

Meanwhile, when a base can be clearly recognized as a particle, the specific surface area of the base can be calculated by the general BET method. In other cases, based on a primary particle diameter obtained from an X-ray diffraction analysis and the calculation according to the Sheller's equation or the observation of a primary particle using an electron microscope, the "surface area" is calculated through spherical conversion and the "weight" is calculated from the true density of the crystal phase by finding out the crystal phase from the diffraction analysis of X-ray or electron beam and the volume obtained from the above spherical conversion, whereby the specific surface area of the base can be obtained.

When the base is a particle, its primary particle diameter is preferably not less than 1 nm but not more than 50 nm and more preferably not less than 2 nm but not more than 30 nm. When the primary particle diameter of the base is within this range, excellent catalytic activity can be maintained.

In the present invention, examples of the alkali metal include lithium, sodium, potassium, rubidium, cesium, francium and the like. One kind of these alkali metals may be used, or two or more kinds thereof may be used. Of these, preferred is sodium and/or potassium, and more preferred is sodium.

The alkali metal content in the photocatalyst can be quantitatively analyzed by using an Atomic Adsorption Spectrophotometer (AA), an Inductively Coupled Plasma Atomic Emission Spectroscopy (ICP), an X-ray Fluorescence Spectrometer (XRF) and the like. The alkali metal content in the silicon oxide coated photocatalyst is preferably not less than 1 ppm and more preferably not less than 10 ppm. When it is not less than 1 ppm, an effect on the improvement of the photodecomposition activity is achieved. When it is not less than 10 ppm, an effect on the improvement of the photodecomposition activity becomes remarkable. The reason why the photodecomposition activity is increased by containing a prescribed amount of the alkali metal is not always definitely clear, but it is considered so because the adsorption rate of the decomposition target is enhanced. On the other hand, the upper limit of the alkali metal content is preferably not more than 1,000 ppm, more preferably not more than 500 ppm and further preferably not more than 200 ppm. By having the content of not more than 1,000 ppm, elution of a silicon oxide film can be suppressed. Furthermore, by having the content of not more than 500 ppm, generation of sintering of the photocatalyst in a calcination treatment at a temperature range of exceeding 800 degree centigrade can be suppressed, and by having the content of not more than 200 ppm, it is possible to make it difficult to further progress sintering of the photocatalyst.

Furthermore, the content of the alkali metal contained in the silicon oxide film is preferably not less than 1 ppm but not more than 500 ppm and more preferably not less than 1 ppm but not more than 200 ppm.

The term "substantially pore-free" means that there are substantially no pores present in a silicon oxide film when the pore size distribution of a base having photocatalytic activity used as a raw material in the production of the silicon oxide film coated photocatalyst is compared with that of a silicon oxide film coated photocatalyst prepared by using the base having photocatalytic activity in the range of 20 to 500 Angstroms.

Specifically, the pore size distribution of a base having photocatalytic activity and that of a silicon oxide film coated photocatalyst are found out by the measurement of the pore size distribution such as a nitrogen adsorption method or the like, and compared to each other, whereby it is possible to determine whether there are substantially any pores present in a silicon oxide film or not.

To more specifically describe a way of finding the pore size distribution according to the nitrogen adsorption method, it is possible to determine whether there are any pores present in a silicon oxide film according to the following methods (1) to (4). Herein, an example of using a photocatalyst particle as a base will be described below:

(1) a photocatalyst particle is dried at 200 degree centigrade and then an $N_2$ adsorption isotherm in the desorption process is measured;
(2) an $N_2$ adsorption isotherm of a silicon oxide film coated photocatalyst in the desorption process is measured;
(3) the aforementioned two $N_2$ adsorption isotherms are interpreted by the BJH (Barrett-Joyner-Halenda) method to obtain log differential pore volume distribution curves in the range of 20 to 500 Angstroms; and

(4) by comparing two log differential pore volume distribution curves, when there is no region in which the log differential pore volume of the silicon oxide coated photocatalyst is not less than 0.1 ml/g greater than the log differential pore volume of the photocatalyst particle, it is determined that there are substantially no pores present in a silicon oxide film. On the other hand, when there is a region in which the log differential pore volume of the silicon oxide coated photocatalyst is not less than 0.1 ml/g greater than the log differential pore volume of the photocatalyst particle, it is determined that there are pores present in a silicon oxide film. Incidentally, to have a range of not less than 0.1 ml/g is because a measurement error of about 0.1 ml/g wide of the log differential pore volume value in the measurement of pore size distribution by the nitrogen adsorption method occurs in many cases. When two log differential pore volume distribution curves are compared in the range of 20 to 500 Angstroms, existence of pores in a silicon oxide film can be substantially determined.

Furthermore, it is more preferable that two log differential pore volume distribution curves are compared and there is no region in which the log differential pore volume of the silicon oxide coated photocatalyst is not less than 0.1 ml/g greater than the log differential pore volume of the photocatalyst particle in the range of 10 to 1,000 Angstroms.

Herein, when there are pores present in the silicon oxide film, it is difficult to improve the photodecomposition activity. The reason is not always definitely clear, but it is supposedly because the diffusion or reflection of light easily occurs in the silicon oxide film due to existence of the pores for reducing light intensity of ultraviolet rays reaching the base having photocatalytic activity, and reducing the amount of holes and electrons generated by the excitation of the photocatalyst. Further, when the same amount of silicon oxide is used for coating, it is supposed that the thickness of the silicon oxide film having pores is increased more than that of the silicon oxide film having no pores as much as the volume of pores and as a result, the physical distance between the base having photocatalytic activity and the organic substance of a decomposition target becomes large so that sufficient photodecomposition activity is not achieved.

The amount of silicon supported on the silicon oxide coated photocatalyst per a surface area 1 $m^2$ thereof according to the present invention is a value calculated from the amount of silicon supported on the silicon oxide coated photocatalyst and the surface area of the silicon oxide coated photocatalyst. The amount of silicon supported on the silicon oxide coated photocatalyst per a surface area 1 $m^2$ thereof is not less than 0.10 mg but not more than 2.0 mg, preferably not less than 0.12 mg but not more than 1.5 mg, more preferably not less than 0.16 mg but not more than 1.25 mg, and further preferably not less than 0.18 mg but not more than 1.25 mg. When the amount is less than 0.10 mg, an effect on the improvement of the photocatalytic activity by the silicon oxide film is small. On the other hand, when the amount exceeds 2.0 mg, the proportion of the base occupied in the silicon oxide coated photocatalyst is too lowered so that the photocatalytic function is hardly improved. The amount of the supported silicon is within the above range, whereby an effect on the improvement of the photocatalytic activity by the silicon oxide film becomes remarkable.

The surface areas of the base and the silicon oxide coated photocatalyst can be measured by using a BET method specific surface area measuring instrument by nitrogen adsorption and desorption after a heating treatment at 150 degree centigrade for 15 minutes in a dry gas flow of a dew point of not more than -195.8 degree centigrade.

The method for producing the silicon oxide coated photocatalyst of the present invention is characterized by maintaining the pH of the mixed solution containing both the base and the silicate at 5 or less when the base present in an aqueous medium is coated with a silicon oxide film by using a silicate.

Examples of the aqueous medium in the above producing method include water or a mixed solution containing water as a main component and an organic solvent capable of being dissolved in water such as aliphatic alcohols, aliphatic ethers and the like. Concrete examples of the aqueous medium include water, and a mixed solution of water and methyl alcohol, water and ethyl alcohol, water and isopropanol, and the like. Of these, water is preferable. Further, these water and mixed solution can be used singly or in combination of two or more kinds. In the aqueous medium, in order to enhance the dispersibility or solubility of the photocatalyst, an organic solvent capable of being dissolved in water such as aliphatic alcohols, aliphatic ethers and the like, and a surfactant such as aliphatic amines, aliphatic polyethers, gelatins and the like can also be further mixed.

As a silicate, a salt of a silicic acid and/or an oligomer thereof is used and it may also be used in combination of two or more kinds. Sodium salts and potassium salts are preferable from the viewpoint that they can be industrially easily available, and an aqueous solution of sodium silicate (JIS K1408 "water glass") is further preferable since a dissolving step can be omitted.

When a base present in an aqueous medium is coated with a silicon oxide film by using a silicate, the aqueous medium, base and silicate are mixed, and the mixed solution is subsequently matured.

Specifically, a coating method includes a step of mixing at least any one set of (i) an aqueous medium containing a base and a silicate, (ii) an aqueous medium containing a silicate and a base, and (iii) an aqueous medium containing a base and an aqueous medium containing a silicate, and a step of maturing the mixed solution. In a step of maturing, coating of a silicon oxide film to the base is slowly progressed.

At this time, it is necessary to maintain the pH of the aqueous medium containing both the base and the silicate at 5 or less, and the pH is more preferably in acidic regions of not more than 4. When the pH is maintained at 5 or less in the absence of a base, a condensate of a silicate compound is hardly precipitated singly from a silicic acid, a silicate ion and/or an oligomer thereof. On the other hand, when the pH is maintained at 5 or less in the presence of a base, the surface of the base functions as a condensation catalyst of a silicate compound so that a silicon oxide film is quickly generated only on the surface of the base. Namely, the acidic regions of pH of 5 or less enable to make a solution containing a silicate compound stable and refer to a region capable of forming silicon oxide in the form of a film on the surface of the base.

In the basic regions of the pH of 11 or more, when a solution containing a silicic acid, a silicate ion and/or an oligomer thereof is matured similarly to the acidic regions of the pH of 5 or less, a condensate of a silicate compound is hardly precipitated. Furthermore, since a silicon oxide film is formed from only a part of the silicate in use, it is not preferable. Furthermore, since the pH range of 6 to 11 easily generates a condensate of a silicate compound, that is, a fine silicon oxide particle and/or gel, the silicon oxide film becomes porous or silicon oxide is partly formed on the surface of the base; therefore, it is not preferable.

When an organic medium such as alcohol or the like is present in an aqueous medium, since the pH cannot be accurately measured with water pH electrodes, it can be measured by using pH electrodes for an aqueous solution containing an organic medium. Separately, it is also possible to measure the pH by substituting the organic medium with water of the same volume.

As a method for maintaining the pH of the mixed solution containing both the base and the silicate at 5 or less, when the base, silicate, aqueous solvent are mixed and matured, a method in which the pH of the aqueous medium is always measured and properly adjusted by adding an acid or a base may be used. However, it is convenient if the total weight of the basic component contained in the silicate used for the production is neutralized and then an acid in an amount sufficient for the pH of 5 or less is present in the aqueous medium in advance.

Any acid can be used for an acid, but a mineral acid such as hydrochloric acid, nitric acid, sulfuric acid or the like can be properly used. Acids may be used singly or in combination of two or more kinds. Among these, hydrochloric acid and nitric acid are preferable. When sulfuric acid is used, the sulfur content remains in the photocatalyst in large quantities so that the adsorption efficiency is deteriorated over time in some cases. The sulfur content in the photocatalyst is preferably not more than 0.5 weight % and more preferably not more than 0.4 weight %, based on the total weight of the photocatalyst.

A base (alkali) is not particularly needed to use separately when the aforementioned method is employed such that the total weight of the basic component contained in the silicate is neutralized and then an acid in an amount sufficient for the pH to be 5 or less is present in the aqueous medium in advance. However, when a base (alkali) is used, any base can be used. Of such bases, alkali metal hydroxides such as potassium hydroxide, sodium hydroxide and the like can be properly used.

When the mixed solution is matured and the base is coated with a silicon oxide film, the reaction conditions such as the reaction temperature, reaction time and the like are not particularly restricted as far as generation of the desired silicon oxide coated photocatalyst is not adversely affected. The reaction temperature is preferably not less than 10 degree centigrade but not more than 200 degree centigrade and more preferably not less than 20 degree centigrade but not more than 80 degree centigrade.

When it is less than 10 degree centigrade, it becomes difficult to progress condensation of a silicate compound, whereby generation of a silicon oxide film is remarkably delayed and the deteriorated productivity of the silicon oxide coated photocatalyst might be brought about in some cases.

If the temperature is higher than 200 degree centigrade, a condensate of a silicate compound, that is, a fine silicon oxide particle and/or gel is easily generated so that the silicon oxide film becomes porous or silicon oxide is partly formed on the surface of the base in some cases.

The time to mature is preferably not less than 10 minutes but not more than 500 hours and more preferably not less than 1 hour but not more than 100 hours. When it is less than 10 minutes, coating with the silicon oxide film is not fully progressed so that an effect on the improvement of the photodecomposition activity due to a coating film might not be sufficiently achieved in some cases. When it takes longer than 500 hours, the base having photocatalytic function is sufficiently coated with the silicon oxide film and also enhances the photodecomposition function, but the productivity of the silicon oxide coated photocatalyst might be deteriorated in some cases.

Meanwhile, the concentration of the base having photocatalytic activity contained in the mixed solution is preferably not less than 1 weight % but not more than 50 weight % and more preferably not less than 5 weight % but not more than 30 weight %. When it is less than 1 weight %, the productivity of the silicon oxide coated photocatalyst might be worsened. When it is higher than 50 weight %, coating of the silicon oxide film to the base is not uniformly progressed so that an effect on the improvement of the photodecomposition activity might not be sufficiently achieved in some cases. The concentration of silicon contained in the mixed solution is preferably not less than 0.05 weight % but not more than 5 weight % and more preferably not less than 0.1 weight % but not more than 3 weight %. When the silicon concentration is less than 0.05 weight %, condensation of a silicate compound is delayed so that coating of a silicon oxide film to the base might not be sufficient in some cases. When the silicon concentration is higher than 5 weight %, coating of a silicon oxide film to the base might not be uniformly progressed in some cases.

In the producing method of the silicon oxide coated photocatalyst of the present invention, the proportion of the amount of the base having photocatalytic activity and the silicate used is preferably not less than 0.01 mg/m$^2$ but not more than 0.50 mg/m$^2$ as a silicon atom per a surface area 1 m$^2$ of the above base. When the silicon oxide coated photocatalyst is produced in a proportion within the above range, in a step of forming a silicon oxide film on the surface of the base, namely, a step of mixing and maturing at least any one set of an aqueous medium containing the above base and a silicate, an aqueous medium containing a silicate and the base, and an aqueous medium containing the base and an aqueous medium containing a silicate, the desired silicon oxide film can be formed on the surface of the base. At the same time, a silicon oxide film having pores might be hardly formed in some cases since the amount of a silicic acid, a silicate ion, and/or an oligomer thereof which is not condensed on the surface of the base and remained unreacted can be suppressed to small. In the range of not less than 0.50 mg/m$^2$ but not more than 5.0 mg/m$^2$, as the proportion becomes greater, the amount of the unreacted product is increased for forming a silicon oxide film having pores in some cases, but generation of pores caused by the progress of condensation of the unreacted product can be avoided by reducing the treatment time.

A concrete method for producing the silicon oxide coated photocatalyst of the present invention includes, for example, a producing method including (step a) a step of mixing at least any one set of an aqueous medium containing a base and a silicate, an aqueous medium containing a silicate and a base, and an aqueous medium containing a base and an aqueous medium containing a silicate, (step b) a step of maturing the mixed solution and coating the base with a silicon oxide film, (step c) a step of separating a silicon oxide coated photocatalyst from an aqueous medium and washing without neutralizing the mixed solution, and (step d) a step of drying and/or calcining the silicon oxide coated photocatalyst, in which, in steps (a) and (b), the pH of the aqueous medium containing both the base and the silicate is maintained at 5 or less.

When separating the silicon oxide coated photocatalyst from the aqueous medium, neutralization causes problems such that an efficiency of the reduction in the alkali metal portion at a washing step becomes worsened, and a silicon compound remained as dissolved in the aqueous medium is condensed and gelated so that a porous silica film is formed. The silicate solution is dealkalized in advance, the dealkalized solution is prepared and used for the production, and the proportion of the amount of the base having photocatalytic function and the silicate used is made smaller. Thus, the above problems can also be avoided or minimized. However, when the silicon oxide coated photocatalyst is separated from the aqueous medium without being neutralized, it is preferable because the above problems can be avoided and the producing method is simplified.

A method for separating the silicon oxide coated photocatalyst from the mixed solution is not particularly limited, but known methods, for example, a natural filtering method, a reduced-pressure filtering method, a pressure filtering method, a centrifugal separation method or the like can be suitably used.

A method of washing the silicon oxide coated photocatalyst is not particularly limited. However, for example, repetition of re-dispersibility in pure water and filtering or desalination washing by ion exchange treatment can be suitably used. Further, depending on the applications of the silicon oxide coated photocatalyst, a washing step can also be omitted. A method of drying the silicon oxide coated photocatalyst is not particularly limited. However, for example, air drying, vacuum drying, heat drying, spray drying or the like can be suitably used. Furthermore, depending on the applications of the silicon oxide coated photocatalyst, a drying step can also be omitted.

A method of calcining the silicon oxide coated photocatalyst is not particularly limited. However, for example, vacuum calcining, air calcining, nitrogen calcining or the like can be suitably used. Usually, calcination can be carried out at a temperature of not less than 200 degree centigrade but not more than 1,200 degree centigrade, but preferably at a temperature of not less than 400 degree centigrade but not more than 1,000 degree centigrade and more preferably at a temperature of not less than 400 degree centigrade but not more than 800 degree centigrade. When the calcining temperature is less than 200 degree centigrade, a calcined film of a desired silicon oxide is not formed on a surface of the base and its structure becomes unstable. Furthermore, a lot of water is present in the vicinity of silicon oxide, whereby the adsorptive capability for gas is not fully exhibited and sufficient photodecomposition activity is not obtained either. When the calcining temperature is higher than 1,200 degree centigrade, sintering of the silicon oxide coated photocatalyst is progressed so that sufficient photodecomposition activity is not achieved.

The content of water contained in the silicon oxide coated photocatalyst is preferably not more than 7 weight %, further preferably not more than 5 weight %, and most preferably not more than 4 weight %. When the water content is higher than 7 weight %, a lot of water is present in the vicinity of silicon oxide, whereby the adsorptive capability for gas is not fully exhibited and sufficient photodecomposition activity is not obtained either.

The thus-obtained silicon oxide coated photocatalyst can adsorb any of acid gas such as acetic acid or the like, basic gas such as ammonia or the like, or non-polar gas such as toluene or the like, and is also excellent in photocatalytic performance.

As described above, a method for producing the silicon oxide coated photocatalyst of the present invention includes reducing the pH for obtaining a substantially pore-free silicon oxide film. At the same time, it becomes important to properly select the concentration of a silicate, the concentration of a base, an acidic solution in use, and conditions such as a calcining temperature after the formation of a film, a calcination time and the like.

The photocatalyst-containing organic material containing a silicon oxide coated photocatalyst will be illustrated below.

The photocatalyst-containing organic material of the present invention is constituted of a member made of an organic substance and the aforementioned silicon oxide coated photocatalyst contained in the member.

The photocatalyst-containing organic material containing the silicon oxide coated photocatalyst of the present invention may be any of various shapes such as plate-like, membrane-like, net-like, film-like, fiber-like, sheet-like shapes or the like. The aforementioned silicon oxide coated photocatalyst of the present invention may be either contained in the entire member in the dispersed state or be present in the vicinity of a surface of the member and contained as such. As a type of the photocatalyst present in the vicinity of a surface of the member and contained as such, for example, a coating layer containing a photocatalyst is kept on a surface of an organic material without containing any photocatalyst at all. In any case, the aforementioned silicon oxide coated photocatalyst present in a surface of the photocatalyst-containing organic material mainly exhibits photocatalytic function. Herein, the surface of the photocatalyst-containing organic material refers to a surface capable of being in contact with a harmful substance or an odor component, on which a photocatalyst-containing organic material is exposed.

The aforementioned member is not particularly limited as far as it is made of an organic substance. The following examples can be cited.

Examples of the synthetic resin include polyolefin resins such as polyethylene, polypropylene, polybutene and the like; polymethacrylic resins such as polymethyl methacrylate (PMMA) and the like; polyacrylic resins such as polymethyl acrylate and the like; polyester resins such as polystyrene, polyester ether, polyvinyl alcohol-polyvinyl chloride copolymer, polyvinyl acetal, polyvinyl butyral, polyvinyl formal, polymethyl pentene, maleic anhydride-styrene copolymer, polycarbonate, polyacetal, polyphenylene ether, polyether ether ketone, polybutylene terephthalate, polyethylene terephthalate, polyethylene naphthalate, polybutylene terephthalate and the like; unsaturated polyester resin, polyamide, polyimide, polyamideimide, polyetherimide, epoxy resin (bisphenol A type, brominated bisphenol A type, o-cresol novolac type, alicyclic epoxy), phenolic resin, urea resin, melamine resin, diallyl phthalate resin, dicyclopentadiene resin, styrene-based elastomer, polyolefin-based elastomer, polyurethane-based elastomer, polyester-based elastomer, polyamide-based elastomer, ionomer, amino polyacrylamide, isobutylene-maleic anhydride copolymer, ABS, ACS, AES, AS, ASA, MBS, ethylene-vinyl chloride copolymer, ethylene-vinyl acetate copolymer, ethylene-vinyl acetate-vinyl chloride graft polymer, ethylene-vinyl alcohol copolymer, chlorinated polyvinyl chloride, chlorinated polyethylene, chlorinated polypropylene, carboxy vinyl polymer, ketone resin, amorphous copolyester, norbornene resin, fluorine plastic, polytetrafluoroethylene, fluorinated ethylene polypropylene, PFA, polychlorofluoroethylene, ethylenetetrafluoroethylene copolymer, polyvinylidine fluoride, polyvinyl fluoride, polyarylate, thermoplastic polyimide, polyvinylidene chloride, polyvinyl chloride, polyvinyl acetate, polysulfone, poly p-vinyl phenol, poly p-methylstyrene, polyallyl amine, polyvinyl ether, polyphenylene sulfide, polymethyl pentene, liquid crystal polymer, oligoester acrylate, xylene resin, guanamine resin, diallyl phthalate resin, DFK resin, vinyl ester resin, furan resin, maleic resin; secondary processed products such as FRP (fiber reinforced plastics), synthetic paper, synthetic pulp, foamed plastics, synthetic wood, photographic materials (film, photographic paper), cellophane and the like.

Examples of natural polymer include starch, cellulose, chitin, chitosan, protein, gluten and gelatin.

Examples of biodegradable resin include polyhydroxybutyrate, polylactic acid, polyglutamic acid and polycaprolactone.

Examples of rubber include natural rubber, isoprene rubber, styrene-butadiene rubber, butadiene rubber, ethylene-propylene rubber, ethylene-acrylic rubber, butyl rubber, chloroprene rubber, nitrile rubber, acrylic rubber, epichlorhydrin rubber, chlorinated polystyrene rubber, chlorosulfonated polystyrene rubber and urethane rubber.

Examples of natural product include wood, cotton, silk, plant fiber and the like.

The member to be applied is different depending on the field in use, but the silicon oxide coated photocatalyst is dispersed in the member made of an organic substance or the photocatalyst-containing organic material having photocatalytic function is formed by being present in the vicinity of the surface of the member.

When the photocatalyst-containing organic material of the present invention is used as a plate, a film, fiber, paper, an adhesive or paint, it is preferable to have the following materials respectively as a raw material.

For the usage as a plate or a film, there is used polyacetal type, polyethylene type, polypropylene type, polystyrene terephthalate, polyether ether ketone, polyetherimide, polyamideimide type, polyvinylidine fluoride, polyetherimide type, polyimide, polyphenylene sulfide, mica-reinforced polytetrafluoro ethylene, polybenzimidazole, aromatic polyester, phenolic resin, polyacrylic resin, polymethacrylic resin, polyvinyl chloride, nylon type, polycarbonate resin, polyvinylidine fluoride, ABS-based resin, styrene grafted polyphenylene ether-based resin, amorphous polyester or the like.

For the usage as fiber or paper, there is used plant fiber such as cotton, kapok, flax, cannabis, ramie, jute, Manila hemp, sisal hemp, Arecaceae, betel-nut palm or seaweed; animal fiber such as wool, Alpaca, cashmere, mohair, silk, spider silk or byssus; regenerated fiber such as wood pulp, cellulose type (rayon, cuprammonium, nitrocellulose) or alginic acid; semi-synthetic fiber such as cellulose acetate, ethylcellulose or chlorinated rubber; and synthetic fiber such as acryl, acetate, aramid, novoroid, viscose rayon, fluorine type, polyamide (nylon), polyvinyl alcohol, polyvinyl acetate, polyvinylidene chloride, polyvinyl chloride, polyacrylonitrile, polyester, polyethylene, polypropylene, polyurethane, polyvinylidene cyanide or polyfluoroethylene.

For the usage as an adhesive, there is used urea resin, melamine resin, phenolic resin, resorcin type, α-olefin resin, water-based polymer-isocyanate type, vinyl acetate resin emulsion, acrylic emulsion, chloroprene rubber type, nitrile rubber type, natural rubber (polyisoprene), polybutadiene, SBR type, epoxy resin type, polyurethane type, styrene-isoprene-styrene block copolymer, styrene-butadiene-styrene block copolymer, styrene-ethylene-butadiene-styrene block copolymer, polychloroprene, butyl rubber, polyisobutylene, acrylonitrile-butadiene copolymer or reclaimed rubber.

For the usage as paint, there is used alkyd resin, aminoalkyd resin, acrylic resin, amino resin, polyurethane resin, epoxy resin, acrylic silicone resin, unsaturated polyester resin, ultraviolet-cured resin, phenolic resin, vinyl chloride resin, synthetic resin emulsion, petroleum resin, chloride polyolefin resin, coumarone resin or chlorinated rubber.

When the silicon oxide coated photocatalyst is contained in a member made of an organic substance, various methods can be employed. However, the organic material is, for example, melted at a temperature of not less than 100 degree centigrade but not more than 300 degree centigrade in a blender such as a mill or the like, and powder of the silicon oxide coated photocatalyst is added to the organic material and dispersed therein for cooling, and then a photocatalyst-containing organic material having photocatalytic function is obtained. This photocatalyst-containing organic material is pulverized and melted at a temperature of not less than 100 degree centigrade but not more than 300 degree centigrade again for carrying out press molding, stretching, spinning and the like. So, the photocatalyst-containing organic material such as a plate, a film or fiber having photocatalytic function can be formed.

In case of fiber, the producing method is not particularly limited, but it can be produced, for example, in the following method. Under the conditions of a spinning temperature of not less than 150 degree centigrade but not more than 300 degree centigrade, a resin and a resin containing a silicon oxide coated photocatalyst in an amount of not less than 1 weight % but not more than 30 weight % are respectively weighed to be 50:50 to 90:10 and discharged from a nozzle (φ0.1 to 0.5 mm) after melt blending for spinning at a spinning rate of not less than 1,000 m/min but not more than 5,000 m/min to obtain a semi-oriented yarn. The semi-oriented yarn is stretched and thermoset, for example, at a stretching temperature of 85 degree centigrade, a thermosetting temperature of 130 degree centigrade and a magnification of 1.8 times to obtain an oriented yarn. This oriented yarn is tube-knitted and dyed. According to such a method, a photocatalyst TiO$_2$ is contained in an amount of not less than 0.1% but not more than 15% in resin fiber and has photocatalytic function so that a fiber product free from coloring of cloth and free from the change in quality over time is obtained.

Furthermore, when a member is made of paper, the producing method is not particularly limited, but it can be produced, for example, in the following method. It can be produced by a first paper making process for making a paper layer, a second paper making process for further combining a paper layer with a paper layer and a functional paper layer forming process for forming a functional paper layer by containing a photocatalyst particle to the paper layer. In this producing method, for example, a cylinder paper machine is used, paper material (aqueous solvent) containing pulp in an amount of not less than 5 weight % but not more than 30 weight %, a fixing agent such as polyacrylamide resin in an amount of not less than 0.1 weight % but not more than 5 weight % and as needed a dispersing agent or the like is supplied so that a paper layer is formed by a cylinder mold. Furthermore, a paper layer (wet paper form) is further laminated on a paper layer by a secondary cylinder. A photocatalyst particle dispersion is supplied to the thus-formed paper layer in the form of wet paper so that the photocatalyst particle is contained in the wet paper. Subsequently, the resultant is dried by using a dryer, thus obtaining paper having photocatalytic function. The content of the photocatalyst in the paper is preferably not less than 0.1 weight % but not more than 30 weight % and particularly preferably not less than 0.5 weight % but not more than 10 weight %. When the content is less than 0.1 weight %, the efficacy of the photocatalyst is poor. When the content exceeds 30 weight %, the strength is not practically good. When the photocatalyst-containing paper is used as a surface layer, the basis weight of the paper layer may be properly set in the range of not less than 20 $g/m^2$ but not more than 80 $g/m^2$.

When the surface of the member is fixed by a coating film form using a solution obtained by mixing an organic material and a photocatalyst as an adhesive or a paint, a paint containing a photocatalyst is once formed, the thus-formed paint is coated on a surface of various members such as resin or the like and dried to give a coating film, thus forming a film having photocatalytic function.

The producing method of an adhesive or a paint is not particularly limited, but it can be produced, for example, by the following method. An organic material is dissolved in a polar solvent such as water, ethanol or the like, or a non-polar solvent such as toluene or the like, and the resulting solution is mixed with a photocatalyst. At this time, in order to enhance the dispersibility of the photocatalyst, it is preferable to mix by using a paint shaker or the like. Furthermore, as a binder, an organic binder such as xanthan gum, methyl cellulose, polyethylene oxide, polyvinyl alcohol or the like, or an organic-inorganic binder such as silicone-based resin or the like can be properly used, in addition to the above adhesive-based organic materials.

In addition to the aforementioned silicon oxide coated photocatalyst and binder, as needed, a solvent, further a coloring agent when used as a paint, or other filler may be properly contained. As a method for coating, various methods can be used. However, for example, depending on the kind of a binder or a solvent, the viscosity of the coating agent or the like, the surface of the member is coated and then dried at room temperature or heated to a temperature of not softening the organic material according to the methods known from the past such as a spray coating method, a dip coating method, a spin coating method, a roll coating method, brush painting, electropainting and the like. A film having photocatalytic function can be formed on the photocatalyst-containing organic material.

The thickness of the film having photocatalytic function is preferably not less than 50 nm but not more than 2 $\mu$m and further preferably not less than 50 nm but not more than 1 $\mu$m. When the film is thinner than 50 nm, the photocatalytic function is not sufficiently exhibited. When the film is thicker than 2 $\mu$m, it is not preferable because the efficiency of the photocatalyst is low, or it is easy to cause cracking, peeling or the like of the film.

Furthermore, the content of the aforementioned silicon oxide coated photocatalyst is preferably not less than 0.01 weight % but not more than 30 weight %, more preferably not less than 0.1 weight % but not more than 20 weight % and further preferably not less than 0.3 weight % but not more than 10 weight %, based on the total photocatalyst-containing organic material. When the content is smaller than 0.01 weight %, the photocatalyst function is insufficient. When the content is greater than 30 weight %, familiarity with other components in the photocatalyst-containing organic material becomes deteriorated so that the photocatalyst-containing organic material cannot be formed.

As described above, since the silicon oxide coated photocatalyst of the present invention keeps catalytic activity called the oxidation decomposition of a staining organic substance, and on the other hand, decomposition or deterioration of the organic material can be suppressed, it is suitable as a photocatalyst used for providing the photocatalytic function to the member made of an organic substance.

When the photocatalyst-containing organic material of the present invention is irradiated with ultraviolet rays, the aforementioned silicon oxide coated photocatalyst comes into contact with harmful substances or odor components such as nitrogen oxides (NOx), organochlorine compound, VOC, ammonia or the like for oxidation decomposition, and is capable of achieving purification of polluted air or solution, action for prevention of contamination, or sterilization and bactericidal action.

On the other hand, in the aforementioned silicon oxide coated photocatalyst present in the surface of the photocatalyst-containing organic material, defects such as powder peeling and the like are prevented since decomposition or deterioration of the organic material is suppressed as compared to the conventional titanium oxide. So, its effect is kept over a long period of time. Furthermore, in case of the organic substance for exhibiting decomposition or deterioration due to ultraviolet rays, the aforementioned silicon oxide coated photocatalyst contained in the vicinity of the surface absorbs ultraviolet rays, whereby ultraviolet rays reaching the member is reduced. As a result, effects such that light resistance and ultraviolet resistance are improved can be obtained in some cases.

The photocatalyst-containing organic material of the present invention can be used for the following purposes. However, the following are examples of the purposes which can be applied, and the present invention is not restricted thereto.

For the purpose of antibacterial properties, the organic material can be applied to seat material, seat cover, carpet, handle, handle cover, shift knob, dash board and room lamp of a car; flooring materials such as strap, luggage rack, lining, meter panel, door knob, inner wall, floor, ceiling, indoor flooring and the like of a train; ceiling materials such as tatami mat, blind, roll screen, furniture, decorative laminated sheet, sudare (screen or blind), member for a bathroom, handrail, table cloth, wall paper, wall material, rock wool and the like; electronic products such as sliding door, paper screen, refrigerator, cooker, hand dryer, personal computer, mouse, keyboard and the like; plastering materials such as spectacle member, artificial foliage plant, medical apparatus, fluorescent lamp cover of lighting apparatus, sealing material, rubber for buildings and the like; textile products such as curtain, cloth, clothing, bedclothes, cushion, chair, shop curtain, yarn, cloth, rope, net and the like; clothing such as coat, trouser, shirt, socks and the like; beddings such as sheet, bedding, blanket and the like; curtain, seat cover, handkerchief, towel, calligraphy paper, paper for Japanese sliding screens, newspaper paper, uncoated printing paper (woodfree printing paper, middle grade wood containing paper, low grade wood containing paper and thin printing paper), coated printing paper (art paper, coated paper, light weight coated paper and the like), special printing paper (colored fine paper and other special printing paper), communication paper (copy paper, no carbon required paper and the like), wrapping paper (unbleached wrapping paper and bleached wrapping paper), sanitary paper (facial tissue, toilet tissue paper and the like), miscellaneous paper (miscellaneous paper for industry and miscellaneous paper for household) and the like. Furthermore, for the purpose of prevention of contamination, the organic material can be applied as a lamp cover of a car and a train, an automatic 2 wheel meter, a helmet shield and a sizing material for exterior applications. In the above purposes, the photocatalyst may be directly contained in the organic material, or the photocatalyst is mixed to an adhesive such as phenolic resin, vinyl resin, epoxy resin or the like, or a paint such as paint, ink, a coating agent, a wall paper surface finishing agent, a building material finishing agent for ceiling or the like, and then a photocatalyst layer may be coated on each material.

EXAMPLES

The present invention is now illustrated in detail below with reference to Examples and Comparative Examples. However, the present invention is not restricted to these Examples and Comparative Examples.

[Preparation of Photocatalyst]

Photocatalysts were prepared and properties thereof were evaluated.
At first, an evaluation method is described.

(i) Alkali metal content
The sodium content was measured as the alkali metal content.
The sodium content was quantitatively analyzed by using an atomic adsorption spectrophotometer (Z-5000, Hitachi Ltd.). The limit of detection was 1 ppm. Accordingly, "sodium cannot be detected" refers to the case in which sodium is not contained or its content is less than 1 ppm.
(ii) Silicon content
The silicon content was quantitatively analyzed by using an X-ray fluorescence spectrometry (LAB CENTER XRE-1700, Shimadzu Corp.).
(iii) Specific surface area
The specific surface area was measured by using a BET method specific surface area measuring instrument.
Preparation examples of the photocatalysts will be illustrated below.
Incidentally, photocatalysts illustrated below have a structure such that raw material titanium dioxide is covered with a calcined film of silicon oxide, excluding a photocatalyst 27. Namely, a silicon oxide precursor film is formed on a surface of the raw material titanium dioxide and then calcined for forming a calcined film of silicon oxide.

(Photocatalyst 1)

To a glass flask were added 200 g of water and 66.9 g of an aqueous solution of 1N hydrochloric acid. 24. 5 g of titanium dioxide (ST-01, Ishihara Sangyo Kaisha, Ltd., adsorptive water content: 9 weight %, specific surface area by BET method specific surface area measuring instrument: 300 $m^2$/g) was dispersed therein to give a solution A. To a beaker were added 100 g of water and 10.7 g of water glass No. 1 ($SiO_2$ content: 35 to 38 weight %, JIS K1408), and the resulting material was stirred to give a B solution. While the solution A was maintained at 35 degree centigrade and stirred, the B solution was added dropwise thereto at a rate of 2 ml/min. to obtain a mixed solution C. The pH of the mixed solution C at this time was 2.3. While the mixed solution C was maintained at 35 degree centigrade, it was continuously stirred for 3 days. Then, the mixed solution C was filtered under a reduced pressure. The obtained filter medium was re-dispersed in 500 mL of water and filtered under a reduced pressure repeatedly four times for washing, and then allowed to stand at room temperature for 2 days. The obtained solid content was pulverized by using a mortar and then subjected to a calcination treatment at 600 degree centigrade for 3 hours to obtain a photocatalyst 1. The sodium content of the photocatalyst 1 was quantitatively analyzed by using an atomic adsorption spectrophotometer (Z-5000, Hitachi Ltd.) and as a result, it was 87 ppm. Furthermore, the silicon content and sulfur content of the photocatalyst 1 were quantitatively analyzed by using an X-ray fluorescence spectrometry (LAB CENTER XRE-1700, Shimadzu Corp.) and as a result, the silicon content was 6.9 weight % and the sulfur content was 0.06 weight %. The specific surface area was measured by using a BET method specific surface area measuring instrument and as a result, it was 212.8 $m^2/g$. Accordingly, the amount of silicon supported on the photocatalyst 1 per a surface area 1 $m^2$ thereof was 0.33 mg. The pore size distribution of the photocatalyst 1 was measured and its results are shown in Fig. 1.

(Photocatalyst 2)

A photocatalyst 2 was obtained in the same manner as in the preparation method of photocatalyst 1, except that the amount of titanium dioxide was 82.1 g and the pH of the mixed solution C was 4.0. The sodium content of the photocatalyst 2 was 56 ppm, the silicon content was 2.4 weight %, and the specific surface area was 133.8 $m^2/g$. Accordingly, the amount of silicon supported on the photocatalyst 2 per a surface area 1 $m^2$ thereof was 0.18 mg.

(Photocatalyst 3)

A photocatalyst 3 was obtained in the same manner as in the preparation method of photocatalyst 1, except that the amount of titanium dioxide was 38.9 g and the pH of the mixed solution C was 2.8. The sodium content of the photocatalyst 3 was 85 ppm, the silicon content was 4.6 weight %, and the specific surface area was 194.9 $m^2/g$. Accordingly, the amount of silicon supported on the photocatalyst 3 per a surface area 1 $m^2$ thereof was 0.24 mg.

(Photocatalyst 4)

A photocatalyst 4 was obtained in the same manner as in the preparation method of photocatalyst 1, except that the amount of titanium dioxide was 12.2 g and the pH of the mixed solution C was 2.5. The sodium content of the photocatalyst 4 was 160 ppm, the silicon content was 9.6 weight %, and the specific surface area was 244.2 $m^2/g$. Accordingly, the amount of silicon supported on the photocatalyst 4 per a surface area 1 $m^2$ thereof was 0.39 mg.

(Photocatalyst 5)

A photocatalyst 5 was obtained in the same manner as in the preparation method of photocatalyst 1, except that 75.0 g of P25 (Nippon Aerosil Co., Ltd., a mixture having a ratio of anatase to rutile of 8:2, purity: 99.5%, specific surface area by BET method specific surface area measuring instrument: 50 $m^2/g$) was used as titanium dioxide, 6.5 g of an aqueous solution of sodium silicate was used, and the pH of the mixed solution C was 2.6. The sodium content of the photocatalyst 5 was 34 ppm, the silicon content was 1.4 weight %, the sulfur content was not detected and the specific surface area was 61.1 $m^2/g$. Accordingly, the amount of silicon supported on the photocatalyst 5 per a surface area 1 $m^2$ thereof was 0.22 mg. The pore size distribution of the photocatalyst 5 was measured and its results are shown in Fig. 2.

(Photocatalyst 6)

A photocatalyst 6 was obtained in the same manner as in photocatalyst 1, except that 70.5 g of PC-102 (Titan Kogyo Kabushiki Kaisha, anatase type, adsorptive water content: 5%, specific surface area by BET method specific surface area measuring instrument: 137 $m^2/g$) was used as titanium dioxide, the pH of the mixed solution C was 3.8, and the mixed solution C was stirred for 16 hours and matured. The sodium content of the photocatalyst 6 was 12 ppm, the silicon content was 2.2 weight %, the sulfur content was 0.19 weight %, and the specific surface area was 127.8 $m^2/g$. Accordingly, the amount of silicon supported on the photocatalyst 6 per a surface area 1 $m^2$ thereof was 0.18 mg.

(Photocatalyst 7)

A photocatalyst 7 was obtained in the same manner as in the preparation method of photocatalyst 6, except that 25.0 g of AMT-100 (Tayca Corporation, anatase type, adsorptive water content: 11%, specific surface area by BET method specific surface area measuring instrument: 290 $m^2/g$) was used as titanium dioxide, and the pH of the mixed solution C was 2.4. The sodium content of the photocatalyst 7 was 17 ppm, the silicon content was 5.5 weight %, the sulfur content was 0.07 weight %, and the specific surface area was 207.2 m$^2$/g. Accordingly, the amount of silicon supported on the photocatalyst 7 per a surface area 1 m$^2$ thereof was 0.27 mg.

(Photocatalyst 8)

A photocatalyst 8 was obtained in the same manner as in the preparation method of photocatalyst 6, except that 25.0 g of TKP-101 (Tayca Corporation, anatase type, adsorptive water content: 11%, specific surface area by BET method specific surface area measuring instrument: 300 m$^2$/g) was used as titanium dioxide, and the pH of the mixed solution C was 2.1. The sodium content of the photocatalyst 8 was 50 ppm, the silicon content was 6.7 weight %, the sulfur content was 0.38 weight %, and the specific surface area was 194.2 m$^2$/g. Accordingly, the amount of silicon supported on the photocatalyst 8 per a surface area 1 m$^2$ thereof was 0.34 mg.

(Photocatalyst 9)

A photocatalyst 9 was obtained in the same manner as in the preparation method of photocatalyst 1, except that the mixed solution C was stirred for 16 hours for maturing. The sodium content of the photocatalyst 9 was 180 ppm, the silicon content was 5.7 weight %, and the specific surface area was 246.2 m$^2$/g. Accordingly, the amount of silicon supported on the photocatalyst 9 per a surface area 1 m$^2$ thereof was 0.23 mg.

(Photocatalyst 10)

A photocatalyst 10 was obtained in the same manner as in the preparation method of photocatalyst 8, except that the resulting filter medium was re-dispersed in 500 ml of water and filtered under a reduced pressure repeatedly 7 times for washing. The sodium content of the photocatalyst 10 was 120 ppm, the silicon content was 5.7 weight %, and the specific surface area was 231.4 m$^2$/g. Accordingly, the amount of silicon supported on the photocatalyst 10 per a surface area 1 m$^2$ thereof was 0.25 mg.

(Photocatalyst 11)

A photocatalyst 11 was obtained in the same manner as in the preparation method of photocatalyst 8, except that the resulting filter medium was re-dispersed in 500 ml of water and filtered under a reduced pressure one time for washing. The sodium content of the photocatalyst 11 was 210 ppm, the silicon content was 5.7 weight %, and the specific surface area was 231.4 m$^2$/g. Accordingly, the amount of silicon supported on the photocatalyst 11 per a surface area 1 m$^2$ thereof was 0.24 mg.

(Photocatalyst 12)

A photocatalyst 12 was obtained in the same manner as in the preparation method of photocatalyst 1, except that the resulting solid content was subjected to a calcination treatment at 400 degree centigrade for 3 hours. The sodium content of the photocatalyst 12 was 93 ppm, the silicon content was 6.9 weight %, and the specific surface area was 255.5 m$^2$/g. Accordingly, the amount of silicon supported on the photocatalyst 12 per a surface area 1 m$^2$ thereof was 0.27 mg.

(Photocatalyst 13)

A photocatalyst 13 was obtained in the same manner as in the preparation method of photocatalyst 1, except that the resulting solid content was subjected to a calcination treatment at 800 degree centigrade for 3 hours. The sodium content of the photocatalyst 13 was 98 ppm, the silicon content was 6.9 weight %, and the specific surface area was 150.7 m$^2$/g. Accordingly, the amount of silicon supported on the photocatalyst 13 per a surface area 1 m$^2$ thereof was 0.46 mg.

(Photocatalyst 14)

A photocatalyst 14 was obtained in the same manner as in the preparation method of photocatalyst 1, except that the resulting solid content was subjected to a calcination treatment at 900 degree centigrade for 3 hours. The sodium content of the photocatalyst 14 was 96 ppm, the silicon content was 6.9 weight %, and the specific surface area was 108.2 m$^2$/g. Accordingly, the amount of silicon supported on the photocatalyst 14 per a surface area 1 m$^2$ thereof was 0.64 mg.

(Photocatalyst 15)

A photocatalyst 15 was obtained in the same manner as in the preparation method of photocatalyst 1, except that the resulting solid content was subjected to a calcination treatment at 1,000 degree centigrade for 3 hours. The sodium content of the photocatalyst 15 was 92 ppm, the silicon content was 6.9 weight %, and the specific surface area was 55.3 $m^2$/g. Accordingly, the amount of silicon supported on the photocatalyst 15 per a surface area 1 $m^2$ thereof was 1.25 mg. The pore size distribution of the photocatalyst 15 was measured and its results are shown in Fig. 3.

(Photocatalyst 16)

A photocatalyst 16 was obtained in the same manner as in the preparation method of photocatalyst 9, except that an aqueous solution of 1N nitric acid was used in the same amount instead of an aqueous solution of 1N hydrochloric acid and the pH of the mixed solution C was 3.2. The sodium content of the photocatalyst 16 was 480 ppm, the silicon content was 6.7 weight %, and the specific surface area was 207.4 $m^2$/g. Accordingly, the amount of silicon supported on the photocatalyst 16 per a surface area 1 $m^2$ thereof was 0.32 mg.

(Photocatalyst 17)

A photocatalyst 17 was obtained in the same manner as in the preparation method of photocatalyst 9, except that 81.7 g of an aqueous solution of 1N nitric acid was used instead of 66.9 g of an aqueous solution of 1N hydrochloric acid and 13.3 g of an aqueous solution of sodium silicate having a different composition ($SiO_2$ content: 29.1 weight %, $Na_2O$ content: 9.5 weight %, JIS K1408 "Water glass No. 3") was used. The sodium content of the photocatalyst 17 was 150 ppm, the silicon content was 3.4 weight %, and the specific surface area was 210.5 $m^2$/g. Accordingly, the amount of silicon supported on the photocatalyst 17 per a surface area 1 $m^2$ thereof was 0.16 mg.

(Photocatalyst 18)

A photocatalyst 18 was obtained in the same manner as in the preparation method of photocatalyst 2, except that the calcining temperature was 200 degree centigrade instead of 600 degree centigrade. The sodium content of the photocatalyst 18 was 56 ppm, the silicon content was 2.4 weight %, and the specific surface area was 237.3 $m^2$/g. Accordingly, the amount of silicon supported on the photocatalyst 18 per a surface area 1 $m^2$ thereof was 0.10 mg.

(Photocatalyst 19)

A photocatalyst 19 was obtained in the same manner as in the preparation method of photocatalyst 17, except that 13.8 g of a potassium silicate solution (Wako Pure Chemical Industries, Ltd., $SiO_2$ content: 28 weight %) was used instead of the water glass No. 3. The sodium content and the potassium content of the photocatalyst 19 were quantitatively analyzed by using an atomic adsorption spectrophotometer (Z-5000, Hitachi Ltd.) and as a result, the sodium content was 74 ppm and the potassium content was 90 ppm. As a result, it was confirmed that the photocatalyst 19 contained potassium in its silicon oxide film. Furthermore, the silicon content of the photocatalyst 19 was quantitatively analyzed by using an X-ray fluorescence spectrometry (LAB CENTER XRE-1700, Shimadzu Corp.) and as a result, the silicon content was 4.9 weight %, while the specific surface area was measured by a BET method specific surface area measuring instrument and as a result, it was 193.9 $m^2$/g. Accordingly, the amount of silicon supported on the photocatalyst 19 per a surface area 1 $m^2$ thereof was 0.25 mg. The pore size distribution of the photocatalyst 19 was measured and its results are shown in Fig. 4.

(Photocatalyst 20)

A commercial titanium dioxide (Ishihara Sangyo Kaisha, Ltd., ST-01) was dried at 200 degree centigrade for 3 hours to obtain a photocatalyst 20. The sodium content of the photocatalyst 20 was 1,400 ppm, and the specific surface area was 214.3 $m^2$/g.

(Photocatalyst 21)

A commercial titanium dioxide (Nippon Aerosil Co., Ltd., P25) was dried at 200 degree centigrade for 3 hours to obtain a photocatalyst 21. The sodium content of the photocatalyst 21 could not be detected. The specific surface area was 50.2 $m^2$/g.
As a result, it was confirmed that the photocatalyst 5 contained sodium in its thermal silicon oxide film, while the photocatalyst 19 contained potassium in its calcined silicon oxide film.

Photocatalysts 22 to 26 were prepared in order to confirm the sodium content or the difference in the performance due to existence of pores derived from the silicon oxide film in the range of 20 to 500 Angstroms.

(Photocatalyst 22)

In accordance with Preparation Example 1 of Examples in Patent Document 4 (Japanese Patent Laid-open No. 1987-260717), ST-01 (Ishihara Sangyo Kaisha, Ltd., adsorptive water content: 9 weight %, specific surface area: 300 m$^2$/g) was used as titanium dioxide to obtain a photocatalyst 22. The sodium content of the photocatalyst 22 was 1,200 ppm, the silicon content was 5.8 weight %, and the specific surface area was 187.3 m$^2$/g. Accordingly, the amount of silicon supported on the photocatalyst 22 per a surface area 1 m$^2$ thereof was 0.31 mg. The pore size distribution of the photocatalyst 22 was measured and its results are shown in Fig. 5.

(Photocatalyst 23)

In accordance with Preparation Example 1 of Examples in Patent Document 4 (Japanese Patent Laid-open No. 1987-260717), P25 (Nippon Aerosil Co., Ltd., purity: 99.5%, specific surface area: 50.8 m$^2$/g) was used as titanium dioxide to obtain a photocatalyst 23. The sodium content of the photocatalyst 23 could not be detected. Meanwhile, the silicon content of the photocatalyst 23 was 2.2 weight %, and the specific surface area was 38.7 m$^2$/g. Accordingly, the amount of silicon supported on the photocatalyst 23 per a surface area 1 m$^2$ thereof was 0.56 mg. The pore size distribution of the photocatalyst 23 was measured and its results are shown in Fig. 6.

(Photocatalyst 24)

To a glass flask were added 250 g of water and 0. 05 g of an aqueous solution of 0.1N sodium hydroxide. 24.5 g of titanium dioxide (ST-01, Ishihara Sangyo Kaisha, Ltd., adsorptive water content: 9 weight %, specific surface area: 300 m$^2$/g) was dispersed therein to give a solution A. To a beaker were added 100 g of water and 10.7 g of an aqueous solution of sodium silicate (SiO$_2$ content: 36. 1 weight %, Na$_2$O content: 17.7 weight %, JIS K1408 "Water glass No. 1"), and the resulting material was stirred to give a B solution. While the solution A was maintained at 35 degree centigrade and stirred, the B solution was added dropwise thereto at a rate of 2 ml/min. to obtain a mixed solution C. The pH of the mixed solution C at this time was 11.5. While the mixed solution C was maintained at 35 degree centigrade, it was continuously stirred for 3 days. Then, the mixed solution C was filtered under a reduced pressure. The obtained filter medium was re-dispersed in 500 ml of water and filtered under a reduced pressure repeatedly four times for washing, and then allowed to stand at room temperature for 2 days. The obtained solid content was pulverized by using a mortar and then subjected to a calcination treatment at 600 degree centigrade for 3 hours to obtain a photocatalyst 24. The sodium content of the photocatalyst 24 was 14,000 ppm, the silicon content was 3.4 weight %, and the specific surface area was 126.1 m$^2$/g. Accordingly, the amount of silicon supported on the photocatalyst 24 per a surface area 1 m$^2$ thereof was 0.27 mg. The pore size distribution of the photocatalyst 24 was measured and its results are shown in Fig. 7.

(Photocatalyst 25)

To a glass flask was introduced 100 g of water. 10. 0 g of titanium dioxide (P-25, Nippon Aerosil Co., Ltd., purity: 99.5%, specific surface area by BET method specific surface area measuring instrument: 50.8 m$^2$/g) was dispersed therein to give a solution A. An aqueous solution of 4N sodium hydroxide was added dropwise thereto so that the pH was adjusted to 10.5. While the resulting solution was heated up to 75 degree centigrade of the liquid temperature and maintained at 75 degree centigrade, 14.8 g of an aqueous solution of sodium silicate (SiO$_2$ content: 29.1 weight %, Na$_2$O content: 9.5 weight %, JIS K1408 "Water glass No. 3") was added thereto and the resulting material was stirred to give a B solution. While the B solution was heated up to 90 degree centigrade and maintained at 90 degree centigrade, an aqueous solution of 1N hydrochloric acid was added dropwise thereto at a rate of 2 ml/min. to give a C solution. With the dropwise addition of the aqueous solution of hydrochloric acid, the pH of the mixed solution was slowly decreased to the acidic regions from 10.5 and the final pH of the C solution became 5. Then, while the C solution was maintained at 90 degree centigrade, it was continuously stirred for 1 hour for maturing. Next, the matured C solution was filtered under a reduced pressure. The obtained filter medium was re-dispersed in 250 ml of water and filtered under a reduced pressure repeatedly four times for washing, and then dried at 120 degree centigrade for 3 hours. The obtained solid content was pulverized by using a mortar and then subjected to a calcination treatment at 600 degree centigrade for 3 hours to obtain a photocatalyst 25. The sodium content of the photocatalyst 25 was 2,500 ppm, the silicon content was 13.0 weight %, and the specific surface area was 68.4 m$^2$/g. Accordingly, the amount of silicon supported on the photocatalyst 25 per a surface area 1 m$^2$ thereof was 1.90 mg.

(Photocatalyst 26)

To a glass flask was introduced 100 g of water. 4.2 g of titanium dioxide (ST-01, Ishihara Sangyo Kaisha, Ltd., adsorptive water content: 9 weight %, specific surface area by BET method specific surface area measuring instrument: 300 $m^2/g$) was dispersed therein to give a solution A. To a beaker were added 43 g of water and 5. 6 g of an aqueous solution of sodium silicate ($SiO_2$ content: 29.1 weight %, $Na_2O$ content: 9.5 weight %, JIS K1408 "Water glass No. 3"), and the resulting material was stirred to give a B solution. Then, while the solution A was maintained at 35 degree centigrade and stirred, the B solution was added dropwise thereto at a rate of 2 ml/min. At this time, an aqueous solution of 1N nitric acid was added dropwise thereto in an appropriate amount such that the pH of the mixed solution was from 6 to 8. The pH of the mixed solution was 7.0 when the dropwise addition of the B solution was completed. Then, while the mixed solution was maintained at 35 degree centigrade, it was continuously stirred for 16 hours for maturing. Next, the mixed solution was-filtered under a reduced pressure. The obtained filter medium was re-dispersed in 250 mL of water and filtered under a reduced pressure repeatedly four times for washing, and then dried at 120 degree centigrade for 3 hours. The obtained solid content was pulverized by using a mortar and then subjected to a calcination treatment at 600 degree centigrade for 3 hours to obtain a photocatalyst 26. The sodium content of the photocatalyst 26 was 5, 900 ppm, the silicon content was 12.0 weight %, and the specific surface area was 258.3 $m^2/g$. Accordingly, the amount of silicon supported on the photocatalyst 26 per a surface area 1 $m^2$ thereof was 0.47 mg. The pore size distribution of the photocatalyst 26 was measured and its results are shown in Fig. 8.

(Photocatalyst 27)

With reference to Example 1 in Patent Document 5 to confirm the difference from a silica hydrate coating film, an aqueous solution of titanyl sulfate was subjected to pyrohydrolysis to prepare metatitanic acid slurry having a crystal particle diameter of 6 nm. 100 ml of the metatitanic acid slurry (100 g/l in terms of $TiO_2$) was heated to 40 degree centigrade, and 5 ml of aqueous solution of sodium silicate of 200 g/l ($SiO_2/TiO_2$ weight ratio = 0.1) was added at a constant rate over 10 minutes as $SiO_2$. After the addition, the pH was adjusted to 4.0 with sodium hydroxide, the solution was maintained at 40 degree centigrade and stirred for 30 minutes. Thereafter, the slurry was filtered and washed, and the obtained cake was dried at 110 degree centigrade for 12 hours and then pulverized using a sample mill to obtain a photocatalyst 27. The sodium content of the photocatalyst 27 was 210 ppm, the silicon content was 5.1 weight %, and the specific surface area was 140.0 $m^2/g$. Accordingly, the amount of silicon supported on the photocatalyst 27 per a surface area 1 $m^2$ thereof was 0.36 mg. Properties of the obtained photocatalyst 27 are illustrated in Table 1.

<Evaluation of Photocatalysts 1 to 27>

[1. Evaluation of Methylene Blue Photodecomposition Activity]

Photocatalysts 1 to 27 were suspended in an aqueous methylene blue solution. Thereafter, the resulting solution was irradiated with light and the concentration of methylene blue in the solution was quantitatively analyzed by spectrometry, whereby the photodecomposition activity was tested. The test operation method in detail is as follows.

(Preparation of Photocatalyst Suspension)

45 g of an aqueous methylene blue solution having a concentration of 40 x $10^{-6}$ mol/L was weighed and introduced into a 100-cc polyethylene jar with a fluorine resin stir bar previously arranged thereinside. Then, the resulting material was stirred by using a magnetic stir bar and 10 mg of the photocatalyst was added thereto. The resulting mixture was violently stirred for 5 minutes and then continuously stirred by adjusting the stirring strength such that the solution was not flown and splashed.

(Preliminary Adsorption Treatment)

Starting from a moment when the addition of photocatalyst was finished, stirring was continued for 60 minutes without irradiation with light. After 60 minutes passed, 3.0 cc of the suspension was collected to give a sample before irradiation with light.

(Photodecomposition Treatment)

3.5 cc of the suspension after the preliminary adsorption treatment was selected and introduced to a quartz standard spectroscopic cell (Tosoh Quartz Co., Ltd., outer size: 12.5 x 12. 5 x 45 mm, optical path width: 10 mm, optical path length: 10 mm, volume: 4.5 cc) with a fluorine resin stir bar previously arranged thereinside and the resulting material was stirred using a magnetic stir bar. Then, it was irradiated with light from external/transverse direction of the spectroscopic cell for 5 minutes. Irradiation with light was carried out by using a light source apparatus, SX-UI151XQ (Ushio Inc., 150 W, a xenon short-arc lamp) as a light source over a quartz filter vessel filled with pure water. The irradiated light intensity was 5.0 mW/cm$^2$ using an ultraviolet intensity meter, UVD-365 PD (Ushio Inc., test wavelength:, 365 nm). After irradiation, the suspension in the spectroscopic cell was collected to give a sample after irradiation with light.

(Quantitative Analysis of Methylene Blue)

An all-plastic 10-cc syringe was equipped with a membrane filter (Toyo Roshi Kaisha, Ltd., DISMIC-13 HP). Sample suspensions before and after irradiation with light were respectively introduced thereto for removing the photocatalyst by extrusion using a piston. At that time, the first half amount of the filtrate was discarded, while the rest half amount of the filtrate was collected in a semi-micro type dispocell (made of polystyrene, optical path width: 4 mm, optical path length: 10 mm, volume: 1.5 cc) for analysis of visible light. Then, the absorbance in a wavelength of 680 nm was measured by using a UV-visible spectrometer (UV-2500, Shimadzu Corp.) for calculating the concentration of methylene blue.

The photodecomposition activity was evaluated by a ratio of the concentration of methylene blue after irradiation with light to the concentration of methylene blue before irradiation with light. The removal rates of methylene blue as photodecomposition activity were shown in Table 1. Furthermore, the adsorption rates of methylene blue were calculated from the concentration of methylene blue before irradiation with light on the basis of the concentration of introduced methylene blue (concentration of methylene blue before the photocatalyst was added) and also illustrated in Table 1.

[2. Determination of Existence of Pores derived from Silicon Oxide Film by Measurement of Pore Size Distribution]

Nitrogen adsorption isotherms of photocatalysts 1 to 27 in the desorption process under liquid nitrogen (77K) were measured by using AUTOSORB (a product of Quantachrome Co., Ltd.).
As pre-treatment of each photocatalyst, vacuum degassing was carried out at 100 degree centigrade. Next, measurement results of each photocatalyst were interpreted by the BJH method and log differential pore volume distribution curves were obtained.
Next, existence of pores derived from silicon oxide films of photocatalysts 1 to 27 was determined. Specifically, log differential pore volume distribution curves of a photocatalyst used as a raw material and a photocatalyst prepared by using the aforementioned photocatalyst as a base (base catalyst) and coated with a silicon oxide film were compared for determining existence of pores derived from the silicon oxide film.
In the range of 20 to 500 Angstroms of the photocatalysts 1 to 27, existence of pores derived from the silicon oxide film is shown in Table 1.
[Table 1]

| Photo-Catalyst No. | Amount of silicon introduced to the base (mg/m$^2$) | Amount of supported silicon (mg/m$^2$) | Sodium content (ppm) | Adsorption Rate (%) | Removal Rate (%) | Silicon oxide film-derived pore |
|---|---|---|---|---|---|---|
| 1 | 0.24 | 0.33 | 87 | 40.8 | 56.1 | No |
| 2 | 0.07 | 0.18 | 56 | 6.6 | 51.9 | No |
| 3 | 0.15 | 0.24 | 85 | 21.2 | 52.5 | No |
| 4 | 0.48 | 0.39 | 160 | 45.5 | 46.7 | No |
| 5 | 0.29 | 0.22 | 34 | 8.8 | 69.2 | No |
| 6 | 0.20 | 0.18 | 12 | 9.3 | 56.1 | No |
| 7 | 0.28 | 0.27 | 17 | 30.7 | 54.5 | No |
| 8 | 0.28 | 0.34 | 50 | 22.5 | 59.4 | No |
| 9 | 0.24 | 0.23 | 180 | 43.2 | 57.9 | No |
| 10 | 0.24 | 0.25 | 120 | 40.6 | 53.8 | No |
| 11 | 0.24 | 0.24 | 210 | 44.9 | 51.9 | No |
| 12 | 0.24 | 0.27 | 93 | 31.7 | 51.0 | No |

(continued)

| Photo-Catalyst No. | Amount of silicon introduced to the base (mg/m$^2$) | Amount of supported silicon (mg/m$^2$) | Sodium content (ppm) | Adsorption Rate (%) | Removal Rate (%) | Silicon oxide film-derived pore |
|---|---|---|---|---|---|---|
| 13 | 0.24 | 0.46 | 98 | 45.0 | 54.1 | No |
| 14 | 0.24 | 0.64 | 96 | 35.0 | 48.0 | No |
| 15 | 0.24 | 1.25 | 92 | 16.4 | 43.2 | No |
| 16 | 0.24 | 0.32 | 480 | 39.4 | 59.9 | No |
| 17 | 0.24 | 0.16 | 150 | 29.5 | 55.9 | No |
| 18 | 0.07 | 0.10 | 56 | 12.1 | 46.0 | No |
| 19 | 0.36 | 0.25 | 74 | 23.6 | 49.2 | No |
| 20 | - | 0.00 | 1400 | 0.5 | 11.8 | - |
| 21 | - | 0.00 | not detected | 0.5 | 45.0 | - |
| 22 | - | 0.31 | 1200 | 57.8 | 31.0 | No |
| 23 | - | 0.56 | not detected | 17.5 | 31.5 | No |
| 24 | 0.24 | 0.27 | 14000 | 47.1 | 36.2 | Yes |
| 25 | 3.99 | 1.90 | 2500 | 11.0 | 22.0 | Yes |
| 26 | 0.59 | 0.47 | 5900 | 56.8 | 38.7 | Yes |
| 27 | 0.50 | 0.36 | 210 | 3.5 | 2.2 | No |

It was confirmed that photocatalysts 1 to 19 exhibited excellent catalytic activities.

[Differential Thermogravimetric Analysis]

In order to look into the water content of the silicon oxide coated photocatalyst, the differential thermogravimetric analysis (Thermo Plus TG8120, Rigaku) was performed. In an air gas flow with a flow rate of 50 ml/min, the temperature was elevated from room temperature to 600 degree centigrade at a rate of 10 degree centigrade/min so that the weight loss rate at that time was measured.
In order to eliminate the influence of moisture absorption after each sample was dried or calcined, the water content was measured after each sample was dried or calcined for cooling for 1 hour. Water contents of the photocatalysts 1, 5, 18 and 27 are shown in Table 2.

[Table 2]

|  | Weight reduction rate (%) |
|---|---|
| Photocatalyst 1 | 0.9 |
| Photocatalyst 5 | 0.6 |
| Photocatalyst 18 | 4.5 |
| Photocatalyst 27 | 8.9 |

From some of the thus-obtained photocatalysts, resin molds were prepared and evaluated.

Example 1

While a laboplastomill was maintained at 200 degree centigrade and then stirred, 48.0 g of polymethyl methacrylate (PMMA) resin was put thereinto and melted. Then, 1.70 g (3% based on the PMMA resin as titanium dioxide) of the photocatalyst 1 was added thereto and the resulting solution was mixed. This composition after cooling was pulverized and then molded by a heat press at 200 degree centigrade to obtain a plate-like mold having a size of 1.5 cm × 8 cm x 1 mm (thickness) (mold 1).

Example 2

Using the photocatalyst 2 and a PMMA resin, a plate-like mold (mold 2) was obtained by the heat press molding in the same method as in Example 1.

Example 3

Using the photocatalyst 5 and a PMMA resin, a plate-like mold (mold 3) was obtained by the heat press molding in the same method as in Example 1.

Example 4

Using the photocatalyst 17 and a PMMA resin, a plate-like mold (mold 4) was obtained by the heat press molding in the same method as in Example 1.

Example 5

A plate-like mold (mold 5) was obtained by the heat press molding in the same method as in Example 1, except that a polypropylene (PP) resin was obtained instead of the PMMA resin.

Comparative Example 1

As a blank experiment, a plate-like mold (mold 6) was obtained by the heat press molding in the same method as in Example 1 only with the PMMA resin.

Comparative Example 2

Using the photocatalyst 20 and a PMMA resin, a plate-like mold (mold 7) was obtained by the heat press molding in the same method as in Example 1.

Comparative Example 3

Using the photocatalyst 21 and a PMMA resin, a plate-like mold (mold 8) was obtained by the heat press molding in the same method as in Example 1.

Comparative Example 4

Using the photocatalyst 24 and a PMMA resin, a plate-like mold (mold 9) was obtained by the heat press molding in the same method as in Example 1.

Comparative Example 5

A plate-like mold (mold 10) was obtained by the heat press molding in the same method as in Comparative Example 1, except that a PP resin was used instead of the PMMA resin.

Comparative Example 6

A plate-like mold (mold 11) was obtained by the heat press molding in the same method as in Comparative Example 2, except that a PP resin was used instead of the PMMA resin.

[Evaluation of Photodecomposition Activity]

The molds 1 to 9 were put in an aqueous methylene blue solution and the resulting solution was irradiated with light, and the concentration of methylene blue in the solution was quantitatively analyzed by spectrometry, whereby the photodecomposition activity was tested. The test operation method in detail is as follows.

(Preparation of Sample)

3 g of an aqueous methylene blue solution having a concentration of $40 \times 10^{-6}$ mol/L was weighed and introduced to a Petri dish having an internal diameter of 4 cm previously arranged thereinside. Then, the molds were cut in a size of 1.5 cm in width and 1.5 cm in length, and placed in a Petri dish.

(Preliminary Adsorption Treatment)

Starting from a moment when the addition of mold was finished, the mold was allowed to stand for 60 minutes without irradiation with light. After 60 minutes passed, the solution was collected to give a sample before irradiation with light.

(Photodecomposition Treatment)

The preliminary adsorption treatment was carried out in the same operation as above and then irradiation with light was carried out by using a black light (Sankyo Denki Co., Ltd., 27W) as a light source. The irradiated light intensity was 1.0 mW/cm² using an ultraviolet intensity meter, UVD-365 PD (Ushio Inc., test wavelength: 365 nm). After irradiation with a black light for 24 hours, the solution in a glass vessel was collected to give a sample after irradiation with light.

(Quantitative Analysis of Methylene Blue)

With regard to samples before and after irradiation with light, the absorbance in a wavelength of 680 nm was measured by using a UV-visible spectrometer (UV-2500, Shimadzu Corp.) for calculating the concentration of methylene blue.
The photodecomposition activity was shown in Table 3 as the removal rate of methylene blue from the concentration of methylene blue after irradiation with light, based on the concentration of methylene blue before irradiation with light.

[Table 3]

|  | Photocatalyst | Decomposition rate (%) |
|---|---|---|
| Mold 1 | 1 | 18.7 |
| Mold 2 | 2 | 16.7 |
| Mold 3 | 5 | 20.3 |
| Mold 4 | 17 | 16.0 |
| Mold 6 | N/A | 0 |
| Mold 7 | 20 | 3.9 |
| Mold 8 | 21 | 10.0 |
| Mold 9 | 24 | 8.5 |

[Weather Resistance Accelerated Deterioration Test]

Using a sunshine weather meter (light source: sunshine carbon arc lamp (25 mW/cm²), irradiation temperature: 63 degree centigrade), molds 1 to 9 were irradiated with light for 500 hours. The weight loss rates of the molds caused by deterioration at this time are shown in Table 4.
Herein, the weight loss rate is obtained by the following formula.

```
Weight loss rate (%) = (mold weight before irradiation with light - mold weight after irradiation with light) / mold weight before

irradiation with light × 100
```

[Table 4]

|  | Resin | Photocatalyst | Weight loss rate (%) |
|---|---|---|---|
| Mold 1 | PMMA | 1 | 1.2 |
| Mold 2 | PMMA | 2 | 1.6 |
| Mold 3 | PMMA | 5 | 1.6 |
| Mold 4 | PMMA | 17 | 1.5 |
| Mold 6 | PMMA | N/A | 0.3 |
| Mold 7 | PMMA | 20 | 2.1 |
| Mold 8 | PMMA | 21 | 3.0 |
| Mold 9 | PMMA | 24 | 2.5 |
| Mold 5 | PP | 1 | 4.3 |
| Mold 10 | PP | N/A | 1.0 |
| Mold 11 | PP | 20 | 5.4 |

In the above Examples, molds were prepared for the photocatalysts 1, 2, 5 and 17, and evaluated. However, it was confirmed that the weight loss rates for the photocatalysts 3, 4, 6 to 16, 18 and 19 were also small like the above.

**Claims**

1. A photocatalyst-containing organic material comprising:

    a member comprising an organic substance; and
    a photocatalyst contained in the member,

    wherein said photocatalyst comprising:

    a base having photocatalytic activity; and
    a silicon oxide film covering the base, wherein the film is substantially pore-free, and

    wherein the photocatalyst has a alkali metal content of not less than 1 ppm but not more than 1,000 ppm.

2. The photocatalyst-containing organic material according to claim 1, wherein said silicon oxide film is a calcined silicon oxide film.

3. The photocatalyst-containing organic material according to claim 2, wherein said silicon oxide film is a calcined film obtained by calcining a silicon oxide at a temperature of not less than 200 degree centigrade but not more than 1,200 degree centigrade.

4. The photocatalyst-containing organic material according to any one of claims 1 to 3, wherein said alkali metal content is not less than 10 ppm but not more than 1,000 ppm.

5. The photocatalyst-containing organic material according to any one of claims 1 to 4, wherein said silicon oxide film does not have pores in the measurement of pore size distribution in the range of 20 to 500 Angstroms according to the nitrogen adsorption method.

6. The photocatalyst-containing organic material according to any one of claims 1 to 5, wherein said base is anatase type titanium oxide or rutile type titanium oxide, or a mixture thereof.

7. The photocatalyst-containing organic material according to any one of claims 1 to 6, wherein said alkali metal is sodium and/or potassium.

8. The photocatalyst-containing organic material according to any one of claims 1 to 7, wherein said base is a particle.

9. The photocatalyst-containing organic material according to any one of claims 1 to 8, wherein the amount of silicon supported on said photocatalyst per a surface area of 1 m$^2$ is not less than 0.10 mg but not more than 2.0 mg.

10. The photocatalyst-containing organic material according to claim 9, wherein the amount of silicon supported on said photocatalyst per a surface area of 1 m$^2$ is not less than 0.16 mg but not more than 1.25 mg.

11. The photocatalyst-containing organic material according to claim 10, wherein said base has a specific surface area of not less than 120 m$^2$/g but not more than to 400 m$^2$/g.

12. The photocatalyst-containing organic material according to any one of claims 1 to 11, wherein said photocatalyst has a sulfur content of 0.5 weight % or less based on the total weight of the photocatalyst.

13. The photocatalyst-containing organic material according to any one of claims 1 to 12, wherein the alkali metal is contained in said silicon oxide film.

14. The photocatalyst-containing organic material according to claim 13, wherein the amount of the alkali metal contained in said silicon oxide film is not less than 1 ppm but not more than 200 ppm based on the total weight of the photocatalyst.

15. The photocatalyst-containing organic material according to any one of claims 1 to 14, wherein said organic substance comprises at least one selected from the group consisting of polyolefin resin, polyurethane resin, polyester resin, polyacrylic resin, polymethacrylic resin, polyamide resin, vinyl compound (co)polymer, formaldehyde resin, allyl resin, epoxy resin, phenolic resin, silicone resin, cellulose and hemicellulose.

Fig. 1

Fig. 2

Fig. 3

Fig. 4

Fig. 5

Fig. 6

Fig. 7

Fig. 8

## INTERNATIONAL SEARCH REPORT

| | International application No. |
|---|---|
| | PCT/JP2006/315878 |

A.  CLASSIFICATION OF SUBJECT MATTER
*B01J35/02*(2006.01)i, *B01J35/10*(2006.01)i, *C08K9/02*(2006.01)i, *C08L101/00*
(2006.01)i

According to International Patent Classification (IPC) or to both national classification and IPC

B.  FIELDS SEARCHED

Minimum documentation searched (classification system followed by classification symbols)
B01J21/00-38/74, C08K9/02, C08L101/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| P,X | JP 2005-281557 A  (Matsushita Electric Industrial Co., Ltd.), 13 October, 2005 (13.10.05), Claims 1, 2, 5; Par. Nos. [0022], [0024], [0028]; example 1 (Family: none) | 1-15 |
| X | JP 2002-159865 A  (Tayca Corp.), 04 June, 2002 (04.06.02), Claims 1, 2, 6; Par. Nos. [0005], [0009] to [0013]; example 1 (Family: none) | 1-15 |
| A | JP 08-132075 A  (Ishihara Sangyo Kaisha, Ltd.), 28 May, 1996 (28.05.96), (Family: none) | 1-15 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 October, 2006 (31.10.06) | 07 November, 2006 (07.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/315878

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-130527 A  (Ishihara Sangyo Kaisha, Ltd.),<br>19 May, 1998 (19.05.98),<br>(Family: none) | 1-15 |
| A | WO 2003/068871 A1  (Asahi Glass Co., Ltd.),<br>21 August, 2003 (21.08.03),<br>& CN 1633480 A | 1-15 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9182782 A
- JP 9225321 A
- JP 3484470 B
- JP 62260717 A
- JP 2002159865 A